# EUROPÄISCHE PATENTANMELDUNG

(11) **EP 1 464 951 A2**
(43) Veröffentlichungstag der Anmeldung: **06.10.2004**
(21) Anmeldenummer: 04101345.9
(22) Anmeldetag: 01.04.2004
(51) Int. Cl.: G01N 27/28, G01N 27/30

(54) **Sicherungsvorrichtung für eine Elektrodeneinbauvorrichtung**

(30) Priorität: 03.04.2003 DE 10315338
(71) Anmelder: Mettler-Toledo GmbH, 8606 Greifensee (CH)
(72) Erfinder: Milanovic, Jelena, 5442, Fislisbach (CH)

(57) **Zusammenfassung**

Eine Einbauelektrodenvorrichtung (1, 101), welche für den Einbau einer Sonde (2, 102) in ein Behältnis für ein Messmedium ausgestaltet ist, umfasst eine am Behältnis befestigbare Armatur (3, 103) mit einem, der Aufnahme, der Halterung und der Führung der Sonde (2, 102) dienenden Sondenschutzrohr (4, 104). Die Sonde (2, 102) ist mit einem Anschluss (11, 12, 111, 112) für elektrische Zuleitungen und die Armatur (3, 103) ist mit einer Schutzhülse (5, 105) für den Schutz dieses Anschlusses (11, 12, 111, 112) gegen mechanische Beanspruchung und Feuchtigkeit versehen. Die Schutzhülse (5, 105) ist mit dem Sondenschutzrohr (4, 104) verbindbar. Die Erfindung zeichnet sich nun dadurch aus, dass ein Sicherungsadapter (25, 125), mit dem sich ausserhalb des Behältnisses befindlichen Ende des Sondenschutzrohres (4, 104) verbunden ist, welcher in eine Vertiefung (29) der Sonde (2, 102) eingreifend, beziehungsweise einen Absatz (32) der Sonde (2, 102) umgreifend, diese gegen ein axiales Verschieben sichert.

## Beschreibung

Die Erfindung betrifft eine Einbauelektrodenvorrichtung zum Einbau einer Sonde in ein Behältnis für ein Messmedium, mit einer am Behältnis befestigbaren Armatur, die ein der Aufnahme, Halterung und Führung einer Sonde dienendes Sondenschutzrohr umfasst, wobei die Sonde mit einem Anschluss für elektrische Zuleitungen und die Armatur mit einer mit dem Sondenschutzrohr verbindbaren Schutzhülse für den Schutz des Anschlusses gegen mechanische Beanspruchung und Feuchtigkeit versehen ist.

Es kann sich bei Sonden für derartige Einbauelektrodenvorrichtungen um Sauerstoffsonden, pH-Messelektroden oder Leitfähigkeitssonden etc. handeln. Die Sonden bestehen vorwiegend aus Glas. Sie werden für die Prozesskontrolle bevorzugt in Reaktoren, Mischbehältern oder in Durchflussrohren installiert, um dort die entsprechenden Parameter eines jeweiligen Messmediums im betreffenden Behältnis zu erfassen. Zu diesem Zweck sind die Sonden in einem Gehäuse beziehungsweise einer Armatur eingebracht. Diese Armatur dient der Halterung, der Führung und dem Schutz der Sonde; insbesondere aber schafft die Armatur eine Verbindung zwischen der Sonde und dem Behältnis, in welchem die Sonde installiert wird, also beispielsweise einem Reaktor, einem Mischbehälter oder einem Durchflussrohr. Man unterscheidet sogenannte statische Armaturen und Wechselarmaturen. Bei letzteren kann die Sonde im eingebauten Zustand in eine Spülkammer zurückgezogen werden und während des Prozesses, für dessen Überwachung sie eingesetzt ist, gereinigt werden.

Eine so genannte statische Armatur offeriert eine solche Möglichkeit nicht. Sie dient lediglich der Halterung, der Führung und dem Schutz der Sonde. In der CH 673 895 A5 ist ein solches Gehäuse beziehungsweise eine solche Armatur beschrieben. Dieses Gehäuse ist Teil einer Glas- oder Einbauelektrodenvorrichtung, beispielsweise zur pH-Messung oder Redoxmessung, und besteht aus einem Gehäuseoberteil und einem als Tauchrohr ausgebildeten Gehäuseunterteil. Das Gehäuseoberteil ist beispielsweise mittels einer Überwurfmutter an einem Stutzen eines Reaktionsgefässes befestigbar. Im Gehäuse ist eine Sonde, zum Beispiel eine Glaselektrode, derart angeordnet, dass deren Schaft durch das Tauchrohr verläuft und in das im Reaktionsgefäss befindliche Medium ragt. Die Glaselektrode wird im Gehäuse mittels einer Mutter und einem Stützring gesichert.

Eine Wechselarmatur, welche mittels Druckluft betätigt wird, ist in der EP 0 590 290 A1 offenbart. Es ist eine Sicherungsvorrichtung vorhanden, die verhindert, dass bei nicht eingesetzter Sonde die Wechselarmatur betätigt wird, indem die Druckluft durch eine bei eingesetzter Sonde verschlossene Öffnung entweicht.

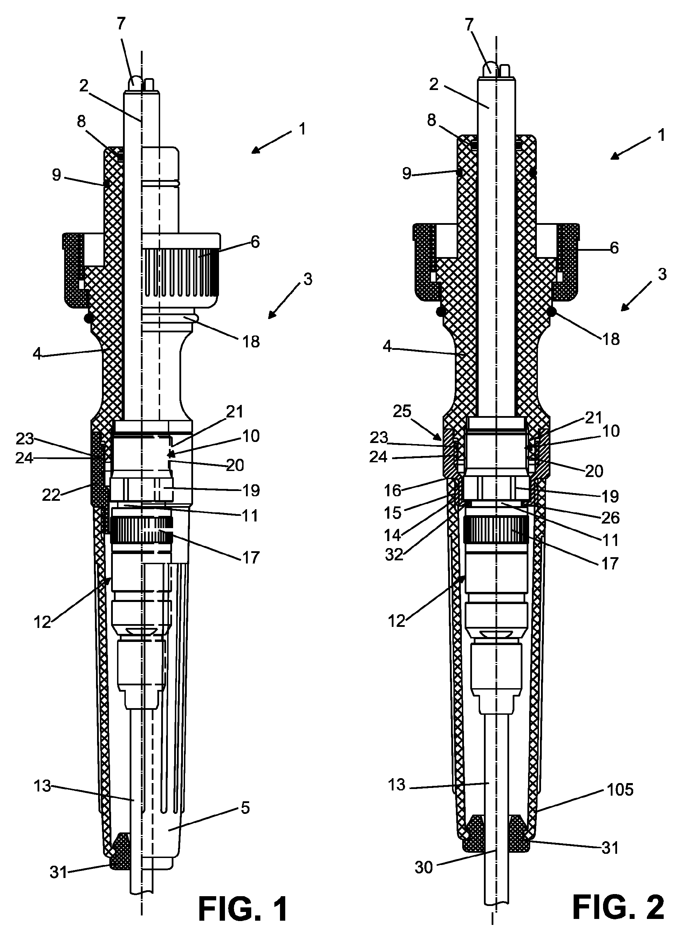

Die Figur 1 zeigt, teilweise angeschnitten (auf der linken Seite der Zeichnung), beispielhaft eine Einbauelektrodenvorrichtung 1 gemäss dem Stand der Technik. Diese weist eine zum Einbau einer Sonde 2, insbesondere einer Glaselektrode, geeignete statische Armatur 3 auf. Die die Sonde 2 umgebende statische Armatur 3 besteht aus einem Sondenschutzrohr 4 und einer Schutzhülse 5. Nahe ihrem, einem Behältnis, in welches die Sonde 2 eingebaut werden soll, zugewandten Ende befindet sich ein Prozessadapter 6, welcher hier in Form einer Überwurfmutter ausgestaltet ist. Mit diesem Prozessadapter 6 wird die Armatur 3 an einem hier nicht gezeigten Anschlussstutzen eines entsprechenden Behältnisses angeschraubt. Ein Teil des Sondenschutzrohrs reicht somit in das hier ebenfalls nicht gezeigte Behältnis. Eine in diesem Sondenschutzrohr 4 geführte Sonde 2 ragt ebenfalls in das Behältnis und überragt das Sondenschutzrohr 4, um in die zu messende Flüssigkeit mit einer sich an der Sondenspitze befindenden Membran 7 einzutauchen. Mittels eines Dichtungsrings 8 wird verhindert, dass Messflüssigkeit zwischen die Sonde 2 und das Sondenschutzrohr 4 gelangt. Ein weiterer Dichtungsring 9 dient der Abdichtung des Sondenschutzrohrs 4 gegenüber dem Anschlussstutzen des Behältnisses. Ein dritter Ring 18 hält den Prozessadapter 6 verschieblich in seiner Position auf dem Sondenschutzrohr 4.

An ihrem sich während einer Installation im Prozess ausserhalb des Behältnisses befindlichen Ende, das heisst in der Figur unterhalb des Prozessadapters 6, angeordnet, weist die Sonde 2 einen Sondenkopf 10 auf, welcher eine Anschlussbuchse 11 (hier nicht im Detail zu sehen) für die Verbindung zu einem mit einem Stecker 12 versehenen, der elektrischen Zuleitung dienenden Kabel 13 besitzt. Der Sondenkopf 10 ist mit einem sechskantförmigen Bereich 19 versehen, damit zum Herstellen der Steckverbindung hier mit der Hand angegriffen und gehalten werden kann. Der Stecker 12 weist eine gerändelte Hülse 17 mit Innengewinde (hier nicht sichtbar) auf, mittels derer durch Aufschrauben auf ein Aussengewinde (hier ebenfalls nicht sichtbar) der Anschlussbuchse 11 die Steckverbindung gesichert wird.

Die Sonde 2 selbst ist mittels eines am Sondenkopf 10 vorhandenen Aussengewindes 20 in das mit einem sich an seinem prozessfernen Ende befindlichen Innengewinde 21 versehene Sondenschutzrohr 4 eingeschraubt. Am selben Ende des Sondenschutzrohrs 4 befindet sich ein Aussengewinde 24 zum Befestigen der Schutzhülse 5. Letztere weist zu diesem Zweck ein Innengewinde 23 auf, das vorzugsweise in einem Verbindungsteil 22, welches in fester Verbindung - beispielsweise durch eine Klebeverbindung - mit der Schutzhülse 5 steht, angebracht ist. Selbstverständlich könnte die Schutzhülse an dieser Stelle auch einstückig ausgestaltet sein. Die Verbindung der Schutzhülse 5 mit dem Sondenschutzrohr 4 wird beim Anschrauben zusätzlich mit einer Dichtungsmasse versehen, um vor allem das Eindringen von Feuchtigkeit in den Verbindungsbereich des elektrischen Anschlusses der Sonde 2 zu vermeiden. Die Schutzhülse 5 kann, wenn sie vom Sondenschutzrohr 4 gelöst ist, entlang dem Kabel 13 verschoben und auch zur Herstellung der Schraubverbindung um das Kabel 13 gedreht werden, da sie im Bereich des Kabeldurchtritts über eine weitgehend dichtende, jedoch flexible, vorzugsweise aus Gummi bestehende Manschette 31 verfügt.

Somit ergibt sich für die Montage einer Armatur 3 am Behältnis und einer Sonde 2 in der Armatur 3 gemäss dem Stand der Technik beispielsweise folgendes Vorgehen:
A. Einführen des Sondenschutzrohrs 4 in den Anschlussstutzen und Befestigen des Prozessadapters 6 am Anschlussstutzen;
B. Einführen der Sonde 2 in das Sondenschutzrohr 4 und Festschrauben im Innengewinde 21;
C. Verbindung des Steckers 12 mit der Buchse 11 des Sondenkopfs 10 und Festschrauben mittels der Hülse 17;
D. Aufschrauben der Schutzhülse 5 auf das Sondenschutzrohr 4, wobei eine Dichtungsmasse in die Schraubverbindung eingebracht wird.

Die Anordnung lässt allerdings auch eine Montage zu, bei welcher die oben genannten Schritte in anderer Reihenfolge ausgeführt werden. Beispielsweise können die Schritte B und C vertauscht werden.

Die Demontage erfolgt in der umgekehrten Reihenfolge, wobei auch hier wiederum Demontage-Schritte vertauscht werden können. Beispielsweise kann es sich ergeben, dass nach Abschrauben der Schutzhülse 5 vom Sondenschutzrohr 4, ein Benutzer in der Absicht, die Schraubverbindung der Hülse 17, d.h. diejenige zwischen dem Stecker 12 und der Buchse 11, zu lösen, es unterlässt, die Sonde 2 am sechskantförmiger Bereich 19 zu halten und versehentlich dadurch die Schraubverbindung zwischen dem Sondenkopf 10 und dem Sondenschutzrohr 4 löst und somit die Sonde 2 samt Steckverbindung aus der Armatur 3 entfernt. Dies kann, falls dieser Vorgang im laufenden Prozess geschieht, verheerende Folgen haben. Die sich beispielsweise im Reaktor befindenden Chemikalien können nach aussen gelangen, was besonders gefährlich ist, wenn der Prozess dort unter Überdruck abläuft. Ein Personenschaden ist in einem solchen Falle nicht ausgeschlossen.

Aufgabe der Erfindung ist es daher, für eine Einbauelektrodenvorrichtung mit einer in einem Behältnis eingebauten Armatur und einer darin installierten Sonde die Sicherheit zu erhöhen. Es ist ein weiteres Erfordernis der erfindungsgemässen Lösung, diese Sicherungsmassnahme für bereits beim Kunden befindlichen Armaturen und Sonden ausführen zu können.

Diese Aufgabe wird mit den Merkmalen des unabhängigen Anspruchs 1 gelöst.

Eine Einbauelektrodenvorrichtung, welche für den Einbau einer Sonde in ein Behältnis für ein Messmedium ausgestaltet ist, umfasst eine am Behältnis befestigbare Armatur mit einem der Aufnahme, der Halterung und der Führung der Sonde dienenden Sondenschutzrohr. Die Sonde ist mit einem Anschluss für elektrische Zuleitungen und die Armatur ist mit einer Schutzhülse für den Schutz dieses Anschlusses gegen mechanische Beanspruchung und Feuchtigkeit versehen. Die Schutzhülse ist mit dem Sondenschutzrohr verbindbar. Die Erfindung zeichnet sich nun dadurch aus, dass im eingebauten Zustand ein Sicherungsadapter, mit dem sich ausserhalb des Behältnisses befindlichen Ende des Sondenschutzrohres verbunden ist, welcher in eine Vertiefung der Sonde eingreifend, beziehungsweise einen Absatz der Sonde umgreifend, diese gegen ein axiales Verschieben sichert.

Der Sicherungsadapter wirkt mit der Sonde derart zusammen, dass ein versehentliches Lösen der Sonde aus dem Sondenschutzrohr verhindert wird.

Es ist von grosser Bedeutung, sowohl die in Frage kommenden Sonden als auch die Armaturen in ihrer Ausführung weitgehend unverändert zu belassen, um somit eine problemlose und daher auch preisgünstige Austauschbarkeit durch das Einbringen des Sicherungsadapters in die Vorrichtung zu gewährleisten, so dass künftig für die Einbauelektrodenvorrichtung nicht mehr die Gefahr besteht, dass eine sich im Prozess befindliche Sonde aus der Armatur versehentlich entfernt werden kann. Vielmehr wird durch die erfindungsgemässe Lösung ein Benutzer gezwungen bei der Demontage der Einbauelektrodenvorrichtung vom Prozessbehältnis nach einem fest vorgegebenen Ablaufschema vorzugehen. Es ist nun mittels des Sicherungsadapters ohne weiteres möglich, den Anschluss für die elektrischen Zuleitungen gefahrlos von der Sonde zu lösen, was im Falle einer elektrischen Betriebsstörung durchaus erforderlich sein kann.

In einer vorteilhaften Ausführungsform der Vorrichtung weist die Sonde einen mit einem Absatz versehenen Sondenkopf auf, an welchem Absatz sich der Sicherungsadapter abstützen kann.

In einer bevorzugten Weiterbildung der Erfindung ist der Sondenkopf mit einem Aussengewinde versehen, mit dem die Sonde in ein Innengewinde des Sondenschutzrohrs einschraubbar ist.

Eine weitere vorteilhafte Ausgestaltung der Einbauelektrodenvorrichtung sieht vor, dass der Anschluss für die elektrischen Zuleitungen eine Steckverbindung ist, wobei zur Sicherung der Steckverbindung eine Hülse des einen Steckverbindungsteils auf das zweite Steckverbindungsteil aufschraubbar ist.

Bevorzugt ist die Schutzhülse lösbar am Sicherungsadapter, insbesondere mittels einer Schraubverbindung befestigbar.

In besonders vorteilhafter Ausgestaltung der Erfindung besteht der abstützbar ausgestaltete Teil des Sicherungsadapters aus einem ringförmigen Kragen. Er kann jedoch auch aus mindestens zwei zur Abstützung auf dem Sondenkopf ausgestalteten Dornen bestehen oder, alternativ, mindestens zwei stiftförmige federnde Elemente oder, in einer weiteren Alternative, ein Ringfederelement aufweisen.

Die Erfindung ist anhand der Beschreibung der in den Figuren dargestellten Ausführungsbeispiele näher erläutert. Es zeigen:
- Figur 1: eine Einbauelektrodenvorrichtung gemäss dem Stand der Technik,
- Figur 2: eine Einbauelektrodenvorrichtung mit erfindungsgemässem Sicherungsadapter im Schnitt,
- Figur 3: die Einbauelektrodenvorrichtung aus Figur 2 in Seitenansicht, wobei der Bereich, in welchem sich der Sicherungsadapter befindet, angeschnitten und als Ausschnitt vergrössert dargestellt ist,
- Figur 4: eine Seitenansicht der Einbauelektrodenvorrichtung mit einer Armatur und einer Sonde, zur Illustration der Montage bzw. Demontage,
- Figur 5: eine andere Ausführungsform einer Einbauelektrodenvorrichtung mit angepasstem Sicherungsadapter.

Die Figur 2 zeigt einen Schnitt durch eine Einbauelektrodenvorrichtung 1 mit Armatur 3 und darin installierter Sonde 2. Bauteile, welche mit jenen der anhand der Figur 1 beschriebenen Vorrichtung identisch sind, sind mit den gleichen Bezugszeichen gekennzeichnet und werden an dieser Stelle nicht erneut beschrieben. Zwischen dem Sondenschutzrohr 4 und einer gegebenenfalls modifizierten Schutzhülse 105 ist ein Sicherungsadapter 25 eingebracht. Um die Abmessungen der Armatur 3 insgesamt in ihrer Längsrichtung nicht unnötig zu vergrössern, kann gegebenenfalls auf das Verbindungsteil 22 der ursprünglichen Schutzhülse 5 verzichtet werden, das heisst die Schutzhülse 5 kann durch eine Schutzhülse 105 ersetzt werden, die ohne Verbindungsteil 22 direkt am Sicherungsadapter 25 aufgeschraubt werden kann. Hierzu ist es erforderlich, die Schutzhülse 105 mit einem Innengewinde 15 zu versehen, welches auf ein Aussengewinde 14 des Sicherungsadapters 25 abgestimmt ist. Ebenso kann jedoch die Schutzhülse 5 mit dem Verbindungsteil 22 am Sicherungsadapter angeschraubt werden, da eine Übereinstimmung der Gewinde 23 und 14 beziehungsweise 15 und 24 bevorzugt ist. Im Übrigen könnte, wie oben bereits erwähnt, die Schutzhülse in diesem Bereich ohnehin auch einstückig, d.h. ohne eingeklebtes Verbindungsteil ausgestaltet sein. Um die Verbindung bündig auszugestalten, weist der Sicherungsadapter 25 eine Schulter 16 auf, an der die Schutzhülse 5, 105, wenn aufgeschraubt, anliegt.

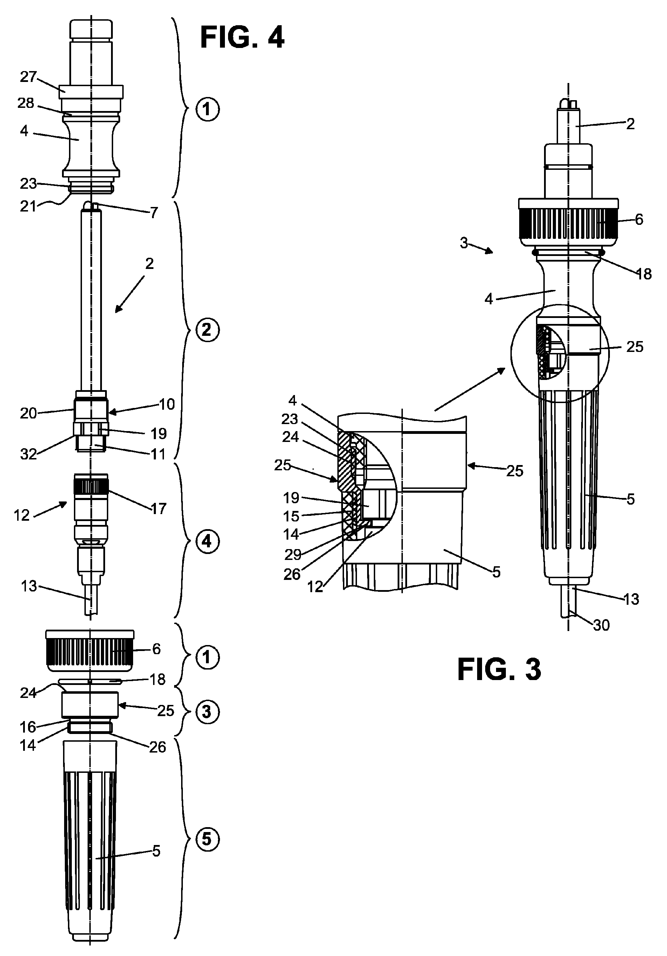

Der Sicherungsadapter 25 zeichnet sich dadurch aus, dass er einen nach innen zur Symmetrieachse 30 der Einbauelektrodenvorrichtung 1 weisenden Kragen 26 besitzt, welcher im eingebauten Zustand den sechskantförmigen Bereich 19 des Sondenkopfs 10 umgreift, insbesondere den zwischen Sechskantbereich 19 und dem aus diesem ragenden Bereich der Anschlussbuchse 11 (siehe insbesondere Figur 4) gebildeten Absatz 32, und sich vorzugsweise an diesem abstützt. Damit wird die Sonde 2 in ihrer in das Sondenschutzrohr 4 installierten Lage festgehalten. Durch diese Gestaltung des Sicherungsadapters 25 ist sowohl die Montage der Armatur 3 und der Sonde 2 sowie deren Demontage fest vorgegeben und es können keine Arbeitsschritte vertauscht werden. Damit ist gewährleistet, dass beim Öffnen der geschraubten Hülse 17, welche die Verbindung des Steckers 12 mit der Buchse 11 sichert, nicht versehentlich die Sonde 2 aus der Armatur 3 gelöst wird.

In der Figur 3 ist die gleiche Einbauelektrodenvorrichtung 1 zu sehen, wie in Figur 2, jedoch in Seitenansicht, wobei zur Verdeutlichung der Bereich, in welchem der Sicherungsadapter 25 angebracht ist, geschnitten dargestellt und zusätzlich als Ausschnitt-Zeichnung vergrössert zu sehen ist. Der Kragen 26 des Sicherungsadapters 25 greift in eine Vertiefung 29 der Sonde 2 ein, die zum Beispiel zwischen dem Absatz 32 und der nicht mit diesem in Berührung gelangenden Hülse 17 des Steckers 12 entsteht, ein.

Die Figur 4 zeigt eine Einbauelektrodenvorrichtung 1 in der Seitenansicht in auseinander genommenem Zustand. Anhand dieser Darstellung lässt sich die Montage in detaillierter Weise, wie folgt, beschreiben.
1. Einführen des Sondenschutzrohrs 4 der Armatur 3 in den Anschlussstutzen, beispielsweise eines Reaktors; Überstülpen des Prozessadapters 6 bis zum Abschnitt 27 des Sondenschutzrohrs 4 und Sicherung durch Einlegen des Rings 18 in die Nut 28; Befestigen des Prozessadapters 6 am Anschlussstutzen.
2. Einführen der Sonde 2 in das Sondenschutzrohr 4 bis zum Sondenkopf 10 und Festschrauben des Sondenkopfes 10 mittels des Aussengewindes 20 im Innengewinde 21 des Sondenschutzrohrs 4 bis die Sonde fest im Sondenschutzrohr sitzt. Beide Gewinde sind vorzugsweise Normgewinde, zum Beispiel vom Typ Pg 13,5.
3. Überstülpen des Sicherungsadapters 25 über das Ende des Sondenschutzrohrs 4 und über den aus diesem heraus ragenden Teil des Sondenkopfes 10, insbesondere die Anschlussbuchse 11; Aufschrauben des Sicherungsadapters 25 auf das Sondenschutzrohr 4, bis der Kragen 26 den Sechskantbereich 19 des Sondekopfes 10 umgreift und vorzugsweise an dem Absatz 32 zwischen Sechskantbereich 19 und Anschlussbuchse 11 anliegt. Dadurch erfährt die Sonde 2 eine zusätzliche Fixierung im Sondenschutzrohr 4 der Armatur 3. Zumindest aber ist ihre Verschieblichkeit entlang ihrer Längsachse, also axial, stark eingeschränkt. Mittels einer Dichtungsmasse, die vor dem Verschrauben in die Schraubverbindung eingebracht wird, kann diese noch gegen das Eindringen von Feuchtigkeit und Staub in den Bereich zwischen Sonde 2 und Sicherungsadapter 25 beziehungsweise Sondenschutzrohr 4 gesichert werden.
4. Jetzt erst ist es möglich den Stecker 12 mit der Anschlussbuchse 11 des Sondekopfes 10 zu verbinden und mittels der gerändelten Hülse 17 zu fixieren. Damit greift der Kragen 26 in die Vertiefung 29 (siehe Figur 3, Ausschnittvergrösserung), die sich zwischen dem Sechskantbereich 19 und dem Stecker 12 ausbildet, ein.
5. Aufschrauben der Schutzhülse 5 auf den mit dem Sondenschutzrohr 4 verbundenen Sicherungsadapter 25. Auch hier ist ein Abdichten der Schraubverbindung mittels oben erwähnter Dichtungsmasse denkbar.

Die Demontage der eingebauten Sonde und Armatur erfolgt in umgekehrter Reihenfolge:
5'. Abschrauben der Schutzhülse 5;
4'. Lösen der Hülse 17 und entfernen des Steckers 12 aus der Anschlussbuchse 11;
3'. Lösen des Sicherungsadapters 25 vom Sondenschutzrohr 4;
2'. Entfernen der Sonde 2 aus dem Sondenschutzrohr 4;
1'. Abschrauben des Prozessadapters 6 vom Behältnis.

Diese Reihenfolge ist streng einzuhalten, da durch den den Absatz 32 des Sechskantbereichs 19 umgreifenden Kragen 26 des Sicherungsadapters 25 erst die Verbindung zwischen Stecker 12 und Anschlussbuchse 11, insbesondere die Hülse 17, abgeschraubt werden muss, bevor der Sicherungsadapter 25 selbst abgenommen werden kann, und daran anschliessend erst die Sonde 2 aus dem Sondenschutzrohr 4 entfernt werden kann. Der Benutzer ist durch die Anordnung also gezwungen, die Reihenfolge der Demontage streng einzuhalten und sämtliche Schritte bewusst auszuführen, wodurch ein versehentliches Lösen der Sonde 2 aus der Armatur 3 nicht mehr möglich ist.

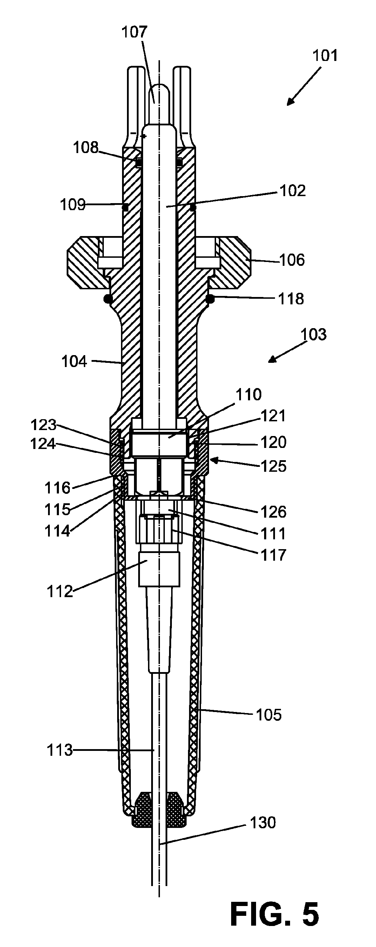

Die Figur 5 zeigt in einer Schnittszeichnung eine zweite Ausführungsform einer Einbauelektrodenvorrichtung 101 mit einer modifizierten Armatur 103 und einer darin installierten, ebenfalls modifizierten Sonde 102. Das Sondenschutzrohr 104 ist an seinem in ein Behältnis einbringbaren Ende verlängert, wodurch die Membran 107 im Prozess einen verbesserten Schutz erfährt. Die Dichtungsringe 108 und 109 dichten das Sondenschutzrohr 104 beziehungsweise den Anschlussstutzen gegen eindringendes Messmedium ab. Der Prozessadapter 106 besteht hier aus einem Spannring; selbstverständlich könnte es sich dabei auch um einen Flansch, welcher mittels Schrauben an einem mit einem Flanschgegenstücke versehenen Anschlussstutzen des Behältnisses befestigt werden kann, handeln. Auch der Spannring ist mittels eines Rings 118 gesichert. Im Bereich des Sondenkopfes 110 ist die Sonde 102 in das Sondenschutzrohr 104 mittels der Normgewinde 120 und 121 eingeschraubt. Der Sicherungsadapter 125, der hier gegenüber dem Sicherungsadapter 25 (Figuren 2 bis 4) in seinen Abmessungen verändert ist, ist am Sondenschutzrohr 104 mittels der Gewinde 123 und 124 angeschraubt. Die Steckverbindung zwischen der Anschlussbuchse 111 und dem mit dem Kabel 113 verbundenen Stecker 112 ist mittels einer Hülse 117 fixiert. Eine Schutzhülse 105 ist über die Gewinde 114 und 115 am Sicherungsadapter 125 angeschraubt und steht an einer Schulter 116 an. Montage und Demontage erfolgen auch hier ebenfalls in der strengen Reihenfolge gemäss den Schritten 1 bis 5 beziehungsweise 5' bis 1'.

Der Kragen 26, 126, welcher sich gemäss der Darstellung in den Figuren 2 bis 5 ringförmig um den Sicherungsadapter 25, 125 erstreckt, kann nun auch in Form von zwei, bevorzugt in 180°-Anordnung, oder mehreren, vorzugsweise gleichmässig beabstandeten zur Symmetrieachse 30, 130 der Anordnung weisende Dornen ausgebildet sein. Diese umgreifen beim Aufschrauben des Sicherungsadapters gemäss dem oben beschriebenen Montageschritt 3 den Sondenkopf 10, 110 und halten diesen damit in dem Sondenschutzrohr 4, 104 der Armatur 3, 103 fest.

Ferner sind auch federnde Elemente als Fixiervorrichtungen des Sicherungsadapters 25, 125 denkbar. Beispielsweise können zwei oder mehrere Federstifte anstatt der oben beschriebenen Dornen oder des Kragens 26, 126 derart am Sicherungsadapter angeordnet sein, dass sie bei der Montage zwar ein Abweichen von der strengen Reihenfolge erlauben, dieses jedoch im Fall der Demontage absolut verhindern. Dies wäre dann gegeben, wenn die der Sonde 2, 102 zugewandte Fläche solcher, beispielweise senkrecht zur Innenfläche des Sicherungsadapters ausgerichteten Stifte in der Weise abgeschrägt wäre, dass sich das längere Ende des Stifts bei installiertem Sicherungsadapter in der Richtung des Sondenkopfes 10, 110 befindet.

In einem solchen Fall könnte zwar eine bereits mit dem Stecker 12, 112 für die elektrischen Zuleitungen verbundene Sonde in das bereits mit dem Sicherungsadapter verbundene Sondenschutzrohr eingeschraubt werden. Umgekehrt muss jedoch erst die Steckverbindung gelöst werden, bevor der Sicherungsadapter abgeschraubt werden kann.

Eine ähnliche Funktion würde ein Ring-Federelement, welches den Sicherungsadapter anstelle des Kragens umgibt, erfüllen.

Die Einbauelektrodenvorrichtung wurde anhand des Beispiels einer statischen Armatur beschrieben. Es versteht sich von selbst, dass die Einbauelektrodenvorrichtung auch eine Wechselarmatur, wie sie beispielsweise die EP 0 590 290 A1 offenbart, aufweisen kann, wobei die Wechselarmatur mit einem erfindungsgemässen Sicherungsadapter versehen ist. Die Erfindung ist ferner nicht beschränkt auf Einbauelektrodenvorrichtungen, deren Verbindungen, seien es diejenige zwischen Sonde und Sondenschutzrohr oder die zwischen Sondenschutzrohr und Schutzhülse oder die Sicherung der Steckverbindung mittels Schraubverbindung erfolgen. Die Verbindungen können beispielsweise jede für sich oder mehrere gleichzeitig in Form eines Bajonettverschlusses realisiert sein.

### Bezugszeichenliste

- 1, 101: Einbauelektrodenvorrichtung
- 2, 102: Sonde
- 3, 103: Armatur, statische Armatur
- 4, 104: Sondenschutzrohr
- 5, 105: Schutzhülse
- 6, 106: Prozessadapter
- 7, 107: Membran
- 8, 108: Dichtungsring
- 9, 109: Dichtungsring
- 10, 110: Sondenkopf
- 11, 111: Anschlussbuchse
- 12, 112: Stecker
- 13,113: Kabel
- 14,114: Aussengewinde des Sicherungsadapters
- 15, 115: Innengewinde der Schutzhülse
- 16, 116: Schulter des Sicherungsadapters
- 17,117: Hülse
- 18,118: Ring
- 19: sechskantförmiger Bereich
- 20, 120: Aussengewinde der Sonde, Normgewinde
- 21, 121: Innengewinde des Sondenschutzrohrs, Normgewinde
- 22: Verbindungsteil der Schutzhülse
- 23, 123: Aussengewinde des Sondenschutzrohrs
- 24, 124: Innengewinde am Verbindungsteil der Schutzhülse
- 25, 125: Sicherungsadapter
- 26, 126: Kragen
- 27: Abschnitt
- 28: Nut
- 29: Vertiefung
- 30, 130: Symmetrieachse
- 31: Manschette
- 32: Absatz

## Patentansprüche

1. Einbauelektrodenvorrichtung (1, 101) für den Einbau einer Sonde (2, 102) in ein Behältnis für ein Messmedium, mit einer am Behältnis befestigbaren Armatur (3, 103) umfassend ein, der Aufnahme, Halterung und Führung der Sonde (2, 102) dienendes Sondenschutzrohr (4, 104), wobei die Sonde (2, 102) mit einem Anschluss (11, 12, 111, 112) für elektrische Zuleitungen und die Armatur (3, 103) mit einer mit dem Sondenschutzrohr (4, 104) verbindbaren Schutzhülse (5, 105) für den Schutz des Anschlusses (11, 12, 111, 112) gegen mechanische Beanspruchung und Feuchtigkeit versehen ist, **dadurch gekennzeichnet, dass** im eingebauten Zustand ein Sicherungsadapter (25, 125) mit dem sich ausserhalb des Behältnisses befindlichen Ende des Sondenschutzrohres (4, 104) verbunden ist, welcher in eine Vertiefung (29) der Sonde (2, 102) eingreifend, oder einen Absatz (32) der Sonde umgreifend, die Sonde (2, 102) gegen ein axiales Verschieben sichert.

2. Einbauelektrodenvorrichtung (1, 101) nach Anspruch 1, **dadurch gekennzeichnet, dass** das Eingreifen des Sicherungsadapters (25, 125) in eine Vertiefung (29) der Sonde (2, 102) oder das Umgreifen eines Absatzes (32) der Sonde (2, 102) durch den Sicherungsadapter (25, 125) ein versehentlichem Lösen der Sonde (2, 102) aus dem Sondenschutzrohr (4, 104) verhindert.

3. Einbauelektrodenvorrichtung (1, 101) nach Anspruch 1 oder 2, **dadurch gekennzeichnet, dass** die Sonde (2, 102) einen mit einem Absatz (32) versehenen Sondenkopf (10, 110) aufweist, an welchem sich der Sicherungsadapter (25, 125) abstützen kann.

4. Einbauelektrodenvorrichtung (1, 101) nach Anspruch 3, **dadurch gekennzeichnet, dass** der Sondenkopf (10, 110) mit einem Aussengewinde (20,120) versehen ist, mit dem die Sonde (2, 102) in ein Innengewinde (21, 121) des Sondenschutzrohrs (4, 104) einschraubbar ist.

5. Einbauelektrodenvorrichtung (1, 101) nach einem der Ansprüche 1 bis 4, **dadurch gekennzeichnet, dass** der Anschluss (11, 12, 111, 112) für die elektrischen Zuleitungen eine Steckverbindung ist, wobei zur Sicherung der Steckverbindung eine Hülse (17, 117) des einen Steckverbindungsteils (12, 112) auf das zweite Steckverbindungsteil (11, 111) aufschraubbar ist.

6. Einbauelektrodenvorrichtung (1, 101) nach einem der Ansprüche 1 bis 5, **dadurch gekennzeichnet, dass** die Schutzhülse (5, 105) lösbar am Sicherungsadapter (25, 125), insbesondere mittels einer Schraubverbindung (14, 15, 114, 115) befestigbar ist.

7. Einbauelektrodenvorrichtung (1, 101) nach einem der Ansprüche 1 bis 6, **dadurch gekennzeichnet, dass** der Sicherungsadapter (25, 125) einen ringförmigen Kragen (26, 126) zum Umgreifen des Absatzes (32) oder Eingreifen in eine Vertiefung (29) der Sonde (2, 102) aufweist.

8. Einbauelektrodenvorrichtung (1, 101) nach einem der Ansprüche 1 bis 6, **dadurch gekennzeichnet, dass** der Sicherungsadapter (25, 125) mindestens zwei Dornen zum Umgreifen des Absatzes (32) oder Eingreifen in eine Vertiefung (29) der Sonde (2, 102) aufweist.

9. Einbauelektrodenvorrichtung (1, 101) nach einem der Ansprüche 1 bis 6, **dadurch gekennzeichnet, dass** der Sicherungsadapter (25, 125) mindestens zwei stiftförmige federnde Elemente zum Umgreifen des Absatzes (32) oder Eingreifen in eine Vertiefung (29) der Sonde (2, 102) aufweist.

10. Einbauelektrodenvorrichtung (1, 101) nach einem der Ansprüche 1 bis 6, **dadurch gekennzeichnet, dass** der Sicherungsadapter (25, 125) ein Ringfederelement zum Umgreifen des Absatzes (32) oder Eingreifen in eine Vertiefung (29) der Sonde (2, 102) aufweist.
